# EUROPEAN PATENT SPECIFICATION

(11) **EP 3 431 554 B1**
(45) Date of publication and mention of the grant of the patent: **06.01.2021**
(21) Application number: 17721205.7
(22) Date of filing: 17.03.2017
(51) Int. Cl.: B63B 32/40, C08L 97/00

(54) **ANTI-SLIP DECK FOR SPORTS BOARD**
PLATAFORMA ANTIDERRAPANTE DE PRANCHA DE DESPORTOS
PLATEFORME ANTIDÉRAPANTE DE PLANCHE DE SPORTS

(30) Priority: 17.03.2016 PT 2016109248
(43) Date of publication of application: 23.01.2019
(73) Proprietor: Rúben Verdadeiro, Sociedade Unipessoal, Lda, 4405-794 Vila Nova De Gaia (PT)
(72) Inventor: VERDADEIRO MARQUES, Helder Ruben, 4405-794 Vila Nova De Gaia (PT)
(74) Representative: Patentree
(86) International application number: PCT/IB2017/051581
(87) International publication number: WO 2017/158576

(56) References cited:
- WO-A1-2008/114103
- BE-A3- 1 002 382
- US-B1- 9 045 201
- Anonymous: "Sustainable Surf on Instagram: "We don't always drink beer, when we do...we prefer it #Black&Tan ���� And while the new #27 pad by @recork will be available in a number of..."", , 14 January 2016 (2016-01-14), XP055384373, Retrieved from the Internet: URL:https://www.instagram.com/p/BAiW_psGp_ n/ [retrieved on 2017-06-22]
- Anonymous: "Wave Tribe releases world's first ecological deck pad..", surfersvillage.com , 20 July 2009 (2009-07-20), XP055384391, Retrieved from the Internet: URL:http://www.surfersvillage.com/content/ wave-tribe-releases-worlds-first-ecologica l-deck-pad [retrieved on 2017-06-22]
- Anonymous: "On A Mission Premiers Their New Cork Traction Pad Exclusive Series", GrindTV.com , 16 August 2010 (2010-08-16), XP055384359, Retrieved from the Internet: URL:http://www.grindtv.com/surf/on-a-missi on-premiers-their-new-cork-traction-pad-ex clusive-series/ [retrieved on 2017-06-22]

## Description

### Technical field

The present disclosure refers to an anti-slip pad for a sliding sports board, as for example water sports boards, snowboards or skateboards.

### Background

There are several patent documents on the state of the art related to anti-slip pads, traction pads, namely the patent documents US 7316597 B2, US 9045201 B1, US 6767264 B2, WO03070563 or US 5460558 A.

Public disclosure made in Instagram, anonymous: "Sustainable Surf on Instagram: (https://www.instagram.com/p/BAiW psGp n/)", 14 January 2016 (2016-01-14), XP055384373 show a pad made of cork and can contains an agglutinated agent. On the product description sold by recork, the pad is made of 100% recycled cork and a biding agent which is natural rubber.

The methods for creating an anti-slip pad consist of scrubbing a paraffin wax on said pad and/or applying a raised centre arch made of a polymer or thermoplastic copolymer.

Currently, most existing anti-slip pads are wholly or partially made of ethylene vinyl acetate which is a synthetic foam produced from the thermoplastic copolymer thereof. Therefore, known pads are pads of synthetic and non-recyclable materials, which contributes for the increase of pollution worldwide.

These documents illustrate the technical problem to be solved by the present solution.

### General description

A board for practising a water sport, in particular surf, may require the presence of an anti-slip pad (traction pad) located in the area in contact with the user. Normally, it is the upper rear area of the water sports board. The upper area of the board is defined as the area in contact with the user and which is not in contact with the water. The upper rear area of the board corresponds to the area the board the individual/surfer steps on when he/she stands up on it.

The function of the anti-slip pad (traction pad) is to allow the support foot of the individual/surfer to stay properly supported, thereby providing greater stability, adherence, support and control to the individual when he/she is standing up on the board. Anti-slip may be defined as being configured to avoid slidding between the user and the board.

Using an anti-slip pad (traction pad) avoids an individual's feet, a water sports practitioner, to slid during practice of said sport, allowing greater adherence and traction to the individual's foot, in particular the back foot, and further allowing the individual to orient and/or guide the board movement during practice of the sport.

The anti-slip pad may also be placed in the upper front zone of the board, providing greater adherence and traction to the individual's front foot.

An anti-slip pad (traction pad) is preferably formed by three elements: a pattern cross grid, a kicktail and raised centre arch

Anti-slip pads, currently available, are wholly produced with ethylene vinyl acetate or mostly produced with ethylene vinyl acetate, with possibility of being formed by various layers of one or more thermoplastic polymers or copolymers. The products currently available on the market are characterised by ethylene vinyl acetate foam blocks/sheets wherein the glueing of foam blocks/sheets is carried out so as to create a raised surface in the centre of the anti-slip pad, designated as raised centre arch.

Producing these anti-slip pads, in ethylene vinyl acetate, for practising water sports presents as disadvantage a greater contribution for pollution worldwide and even though it is possible to obtain anti-slip pads with different densities and, therefore, adaptable to the user's experience, currently this possibility is not taken into account by world producers of anti-slip pads.

Another disadvantage associated with the use of anti-slip pads produced wholly or partially in ethylene vinyl acetate refers to the union of the pattern cross grid with the kicktail. The union of these two elements for forming the anti-slip pad is responsible for generating a tension between these two elements and for creating a fragility zone, which with the use of the board allows the accumulation of waste and favours the detachment of the anti-slip pad from the board.

The disclosure herein presented comprises several advantages, namely environmental advantages, since cork is a sustainable material, recyclable, eco-friendly and whose use for producing anti-slip pads for water sports boards, renders the use of ethylene vinyl acetate unnecessary.

Therefore, the present disclosure suppresses the environmental disadvantages that current anti-slip pads (traction pads) present and also allows eliminating the tensions and fragility zones of the pad, increasing the lifetime thereof.

Currently, there is no anti-slip pad produced mostly with cork. This situation is due, among others, to the difficulty there is in working and machining cork so as to obtain an anti-slip pad able for water sports.

Obtaining the anti-slip cork pad herein disclosed was not a simple linear process. Several obstacles have been overcome to make it possible to obtain the anti-slip pad herein disclosed. The obstacles that had to be overcome are summarised in the following points:
- choice of a suitable density for the production process of the anti-slip pad herein disclosed;
- choice of a suitable/appropriate density for providing traction and comfort to the anti-slip pad user;
- choice of a suitable material's strength so that it may resist to aggressions inherent to the practice of water sports, for example resist to immersion in salt water;
- correction of the part's design for eliminating the spots that presented some degradation in the usage tests thereof of the anti-slip pad;
- application of the manufacturing process with ethylene vinyl acetate applied on cork causes problems in the tension zones, opening cracks and even breaking it;
- defining a construction and manufacturing process of said anti-slip pad that does not subject the cork to stress and tension resulting from the union of the parts as it is usually done with ethylene vinyl acetate foam;
- defining a process that allows incorporating colours and drawings in the anti-slip pad herein disclosed.

The performance of the present disclosure is greater than the equivalent products already existing for the practice of water sports, namely in terms of adherence and traction to the individual's foot than the currently known pads and strength of said pad.

The advantages of the anti-slip pad of the present disclosure are summarised in the following points:
- flexible, buoyant, impervious;
- made of a mostly ecological and natural material - cork;
- it generates the traction necessary to the user's foot who positions himself/herself closer to the board's tail;
- possibility of choosing an anti-slip pad depending on the density function thereof, that is, it is possible to choose an anti-slip pad, softer or harder, so as to provide, to the user, greater or lesser touch-sensitivity, in comparison with the moulded thermoplastic elastomer material pads currently known and manufactured;
- elimination of the tension points when glueing the anti-slip pad to the board, which renders the anti-slip pad more resistant to detachment.

The present disclosure refers to an anti-slip cork pad for applying in a water sports board. board, as defined by the appended claims.

In an embodiment, joining a raw material of low and medium density, in particular a cork with a granulometry between 0.5-10 nm, with an agglutinating agent forms a compound agglomerate, being that the agglomeration of the cork granules may further be mixed with other materials as for example rubber, plastic, asphalt, cement, gypsum, casein, resins, glues, originating composite agglomerates, thereby obtaining a diversity of products.

The present disclosure refers to a sports board anti-slip pad, in particular water sports, comprising
90 % - 97 % (w/w) of cork with a granulometry of 0.5 - 10 mm, preferably 0.5 - 2 mm, even more preferably 0.5 - 1 mm and
3 % - 10 % (w/w) of an agglutinating agent.

In an embodiment, said anti-slip pad preferably comprises
94% - 97% (w/w) of cork with a granulometry of 0.5 - 10 mm, preferably 0.5 - 2 mm, even more preferably 0.5 - 1 mm and
3 %-6 % (w/w) of an agglutinating agent.

The anti-slip pad according to the invention further comprises granulometry varying between 0.5 - 10 mm, preferably between 0.5 - 2 mm, preferably between 0.5 - 1 mm.

In an embodiment, the measurement of the granulometry/size of the cork particle/granule may be carried out in various ways, in this disclosure the particle granulometry/size was carried out on the basis of the standard granulometry analysis by mechanical sieving, namely the one described by NP ISO 2030 of 2011. The cork granulometry may further be determined by screening, sieving and/or mesh.

The anti-slip pad according to the invention comprises an agglutinating agent wherein said agglutinating agent may comprise 1 - 15% (w/w) of cork, preferably 2 - 10% (w/w) of cork, even more preferably 2 - 5% (w/w) of cork.

In an embodiment, the agglutinating agent may be selected from the following list: polyurethane synthetic resin, phenolic synthetic resin, phenol formaldehyde resin, melamine resin, resin of plant origin, enzyme-based resin, urea formalin resin, thermoplastic resin, in particular polyvinyl chloride, aqueous-based polyurethane or mixtures thereof, among others.

The anti-slip pad according to the invention comprises a density at 20 °C varying between 150 - 460 kg/m³.

In an embodiment, and to obtain further better results, said anti-slip pad may further comprise at least an additive selected from the following list: dyes, fragrances, emulsifiers, stabilizers, waterproofers or combinations thereof.

In an embodiment, one of the waterproofers that may be used is a polyurethane synthetic resin which is an aliphatic polyurethane resin comprising an acrylate copolymer.

In an embodiment, the cork granules may be dyed with pigments, therefore allowing various colourings.

In an embodiment, the pad thickness in the pattern cross grid may vary between 1-10 mm, preferably 2-5 mm.

In an embodiment, the pad thickness in the raised centre arch zone may comprise a maximum thickness up to 15 mm.

In an embodiment, the pad thickness in the rear kicktail zone may comprise a maximum thickness up to 30 mm.

In an embodiment, the pad thickness may vary between 1-10 mm, preferably 2-5 mm; the pad thickness in the centre kicktail zone may comprise a maximum thickness up to 15 mm; the pad thickness in the rear kicktail zone may comprise a maximum thickness up to 30 mm.

The anti-slip pad according to the invention comprises a plurality of protuberances able to avoid or reduce slippage of its user, in particular user's one foot or feet slippage.

Said protuberances are circular, triangular, square, pentagonal, hexagonal or combinations thereof.

In an embodiment, said protuberances may comprise wave-like patterns, graphic designs, or combinations thereof.

In an embodiment, the anti-slip pad may further comprise an adhesive layer able to adhere said pad to the board surface.

In an embodiment, the anti-slip pad may be obtainable by moulding.

In an embodiment, and to obtain further better results, the anti-slip pad may further be obtainable by machining of 2 or more parts, in particular 3 parts previously formed and glued to each other; being that one of said parts is a base part able to receive an intermediate parallelepiped part and able to further receive another parallelepiped part positioned in the end of the base part. In this embodiment, herein said parts are glued in "T" over the base part.

In an embodiment, the anti-slip pad is a traction pad.

In an embodiment, the anti-slip pad further comprises an adhesive material in the lower end thereof so as to promote its adhesion to the upper part of the board.

In an embodiment, the anti-slip pad may be installed in any part of the upper zone of the board.

In an embodiment, more than one anti-slip pad may be installed in any part of the upper zone of the board.

The present disclosure also refers to a water sports board comprising the anti-slip pad herein disclosed and wherein the water sports board may be a surfboard, a paddleboard, a skimming board, a windsurf board, a kitesurf board, a wakeboard, a kneeboard, a wakesurf board or a wakeskate board. Alternatively, the present disclosure also refers to a vessel hull for water sports comprising the anti-slip pad herein disclosed, for example catamarans or sailing vessels.

The present disclosure also refers to a winter sports board, in particular the anti-slip pad herein disclosed may be used in a snowboard.

The present disclosure also refers to a skateboard, in particular the anti-slip pad herein disclosed may be used in a skateboard.

The present disclosure further refers to a process for producing an anti-slip pad that may comprise the moulding and/or machining of the described material.

In an embodiment, the moulding process may comprise the following steps:
mixing 90 % - 97 % (w/w) of cork with a granulometry of 0.5 - 10 mm, preferably 0.5 - 2 mm, even more preferably 0.5 - 1 mm and 3 % - 10 % (w/w) of an agglutinating agent; preferably 93 % - 97 % (w/w) of cork with a granulometry of 0.5 - 10 mm, preferably 0.5 - 2 mm, even more preferably 0.5-1 mm and 3 % - 6 % (w/w) of an agglutinating agent;
inserting the mixture into a mould;
closing the mould and sealing the mould for compacting the mixture of the cork agglomerate;
cold drying;
opening the mould and extracting the part from the moulding surfaces;
optionally one of the steps of the manual finishing may comprise a step of cutting the product obtained with the previous steps wherein the product may be cut so as to obtain two parts, three parts, four parts or five parts.

In an embodiment, the machining process may comprise the following steps:
preparing a cork agglomerate block with a composition comprising a composition between 90 % - 97 % (w/w) of cork with a granulometry of 0.5 - 10 mm and 3 % - 10 % (w/w) of an agglutinating agent; preferably 93 % - 97 % (w/w) of cork with a granulometry of 0.5 - 10 mm and 3 % - 6 % (w/w) of an agglutinating agent;
fixing said block in a milling machine;
machining said block until the intended shape is obtained;
removing the part from the milling machine;
applying the manual finishing;
optionally the step of machining the cork agglomerate block comprises machining the circular, triangular, square, pentagonal, hexagonal protuberances or combinations thereof;
optionally one of the steps of the manual finishing may comprise a step of cutting the product obtained with the previous steps wherein the product may be cut so as to obtain two parts, three parts, four parts or five parts.

In an embodiment, the present disclosure also refers to an anti-slip pad wherein the anti-slip pad is an agglomerate cork mono-block, this mono-block being produced by the machining or moulding process.

In an embodiment, producing the anti-slip pad further comprises a step for softening the edges of said pad and diminish possible aggressions, both caused by the user's foot and by the leach holding the board to the foot.

Throughout the description and claims the word "comprises" and variations thereof, are not intended to exclude other technical features, as other components, or steps. Additional objects, advantages and features of the disclosure will become apparent to those skilled in the art upon examination of the description or may be learned by practice of the invention. The following examples and figures are for illustrating the description and sould not be seen as limiting the scope of the disclosure. Besides, the present disclosure covers all possible combinations of specific or preferential embodiments herein described. The scope of the invention is defined by the appended claims.

### Brief description of the drawings

The following figures provide preferred embodiments for illustrating the description and should not be seen as limiting the scope of the disclosure.

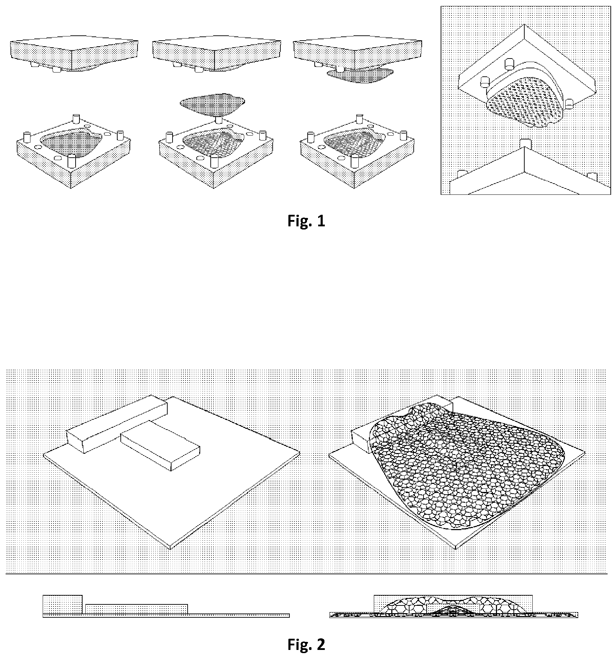

**Figure 1****:** Schematic representation of the moulding process.
**Figure 2****:** Schematic representation of a mono-block for machining, side and front view.

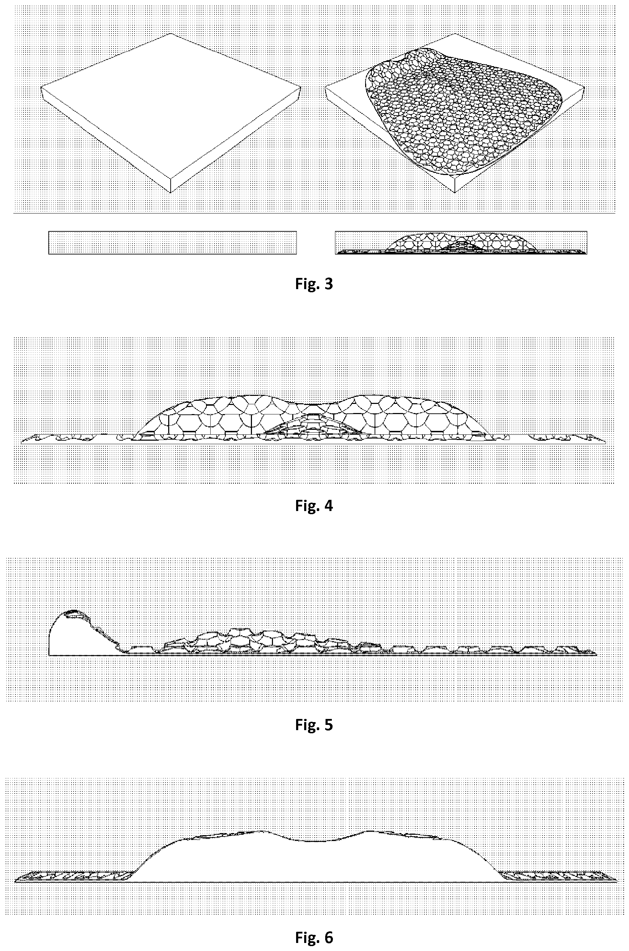

**Figure 3****:** Schematic representation of the construction process of a mono-block by overlapping parts for machining, side and front view.
**Figure 4****:** Schematic representation of a part viewed from the front.
**Figure 5****:** Schematic representation of a part viewed from the side.
**Figure 6****:** Schematic representation of a part viewed from the back.

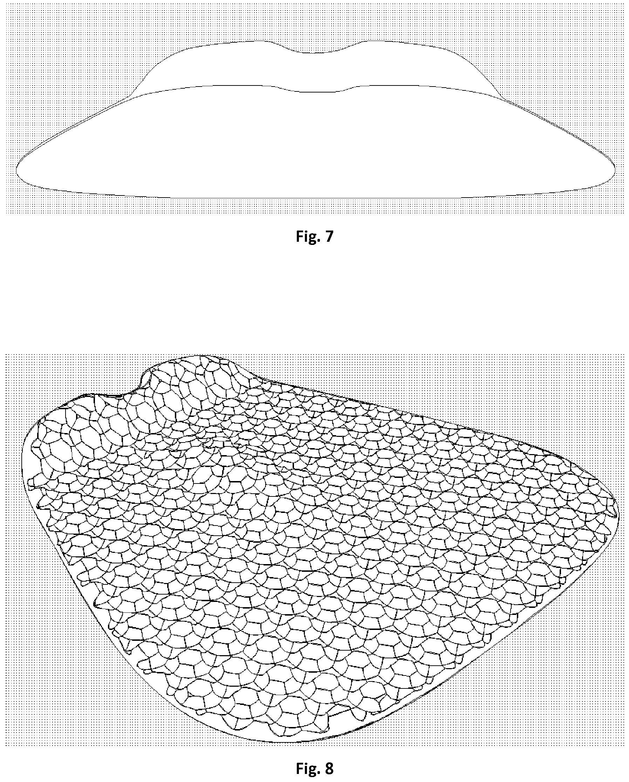

**Figure 7****:** Schematic representation of a part viewed from a back perspective for demonstrating absence of unions.
**Figure 8****:** Schematic representation of a part viewed from above.

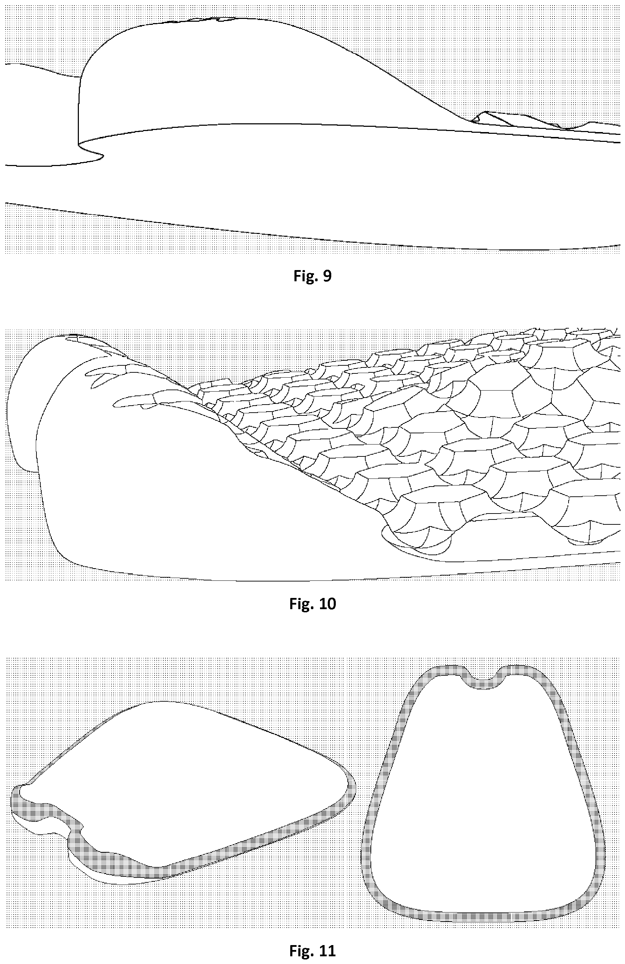

**Figure 9****:** Schematic representation of a detail in perspective from the side of the rear kicktail for demonstrating the absence of unions and the part design.
**Figure 10****:** Schematic representation of a detail in perspective from the side of the rear kicktail for demonstrating the design with the softened shapes.
**Figure 11****:** Schematic representation of a shading marking in the part of the functional design contribution for softening the zones subject to aggressions (peripheral zones).

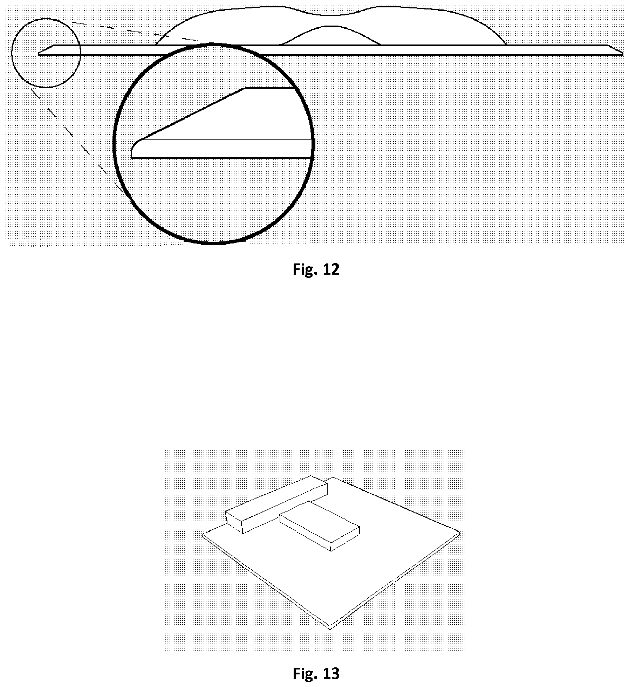

**Figure 12****:** Schematic representation of a detail of the edge design.
**Figure 13****:** Schematic representation of the construction of a mono-block by overlapping parts.

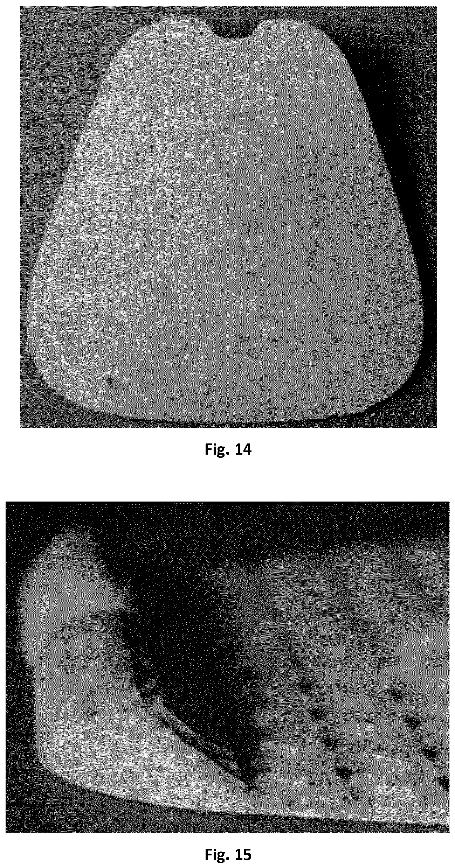

**Figure 14****:** Picture of the lower surface of the anti-slip pad herein disclosed.
**Figure 15****:** Picture of side detail of the anti-slip pad demonstrating the absence of tensions or fragilities between the pattern cross grid and kicktail.

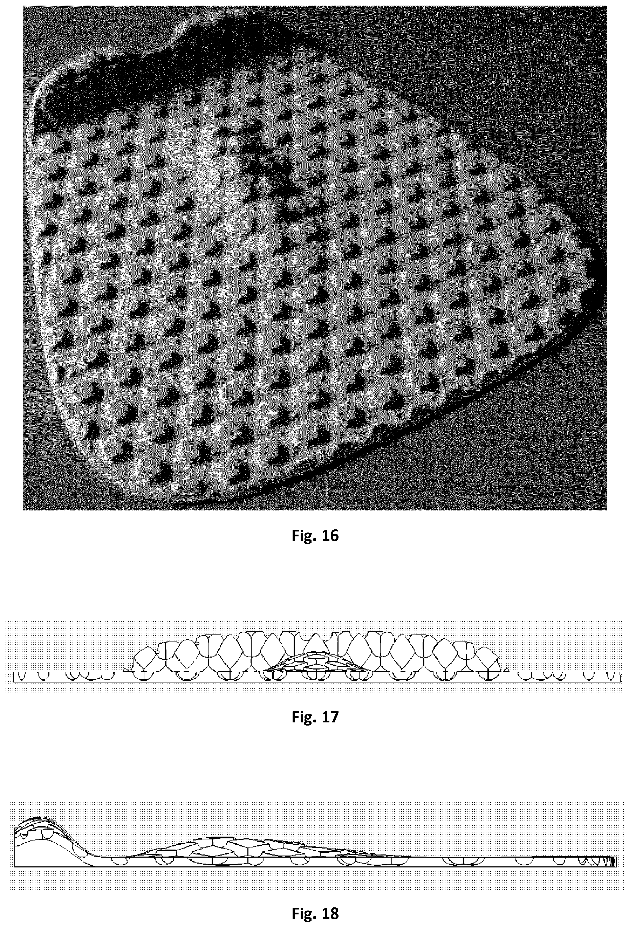

**Figure 16****:** Picture of the finished anti-slip pad and wherein the pattern cross grid of the pad comprises hexagonal protuberances.
**Figure 17****:** Anti-slip pad known in the state of the art in ethylene vinyl acetate viewed from the front.
**Figure 18****:** Anti-slip pad known in the state of the art in ethylene vinyl acetate viewed from the side.

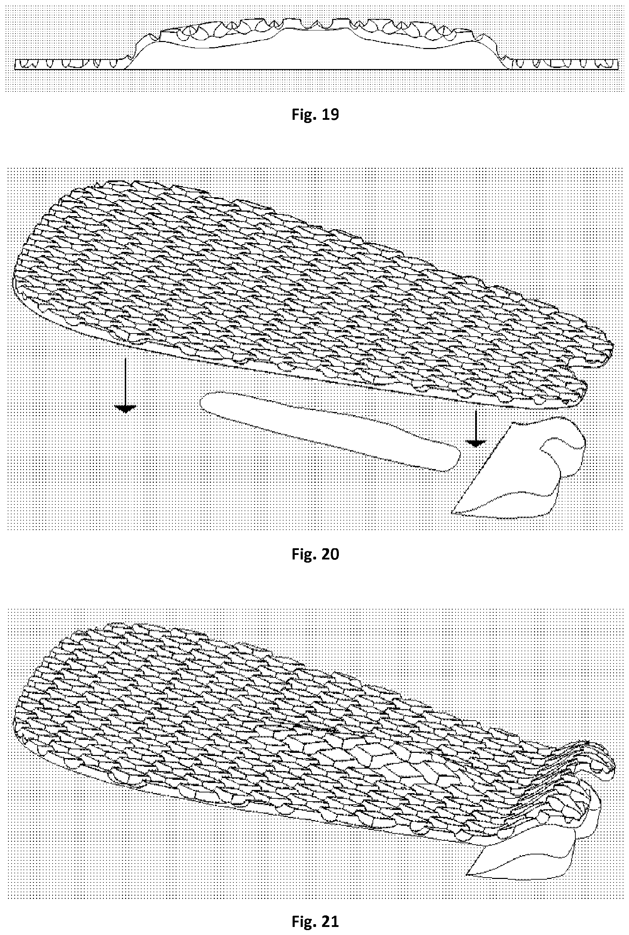

**Figure 19****:** Anti-slip pad known in the state of the art in ethylene vinyl acetate viewed from the back.
**Figure 20****:** Anti-slip pad known in the state of the art in ethylene vinyl acetate construction process.
**Figure 21****:** Anti-slip pad known in the state of the art in ethylene vinyl acetate above perspective.

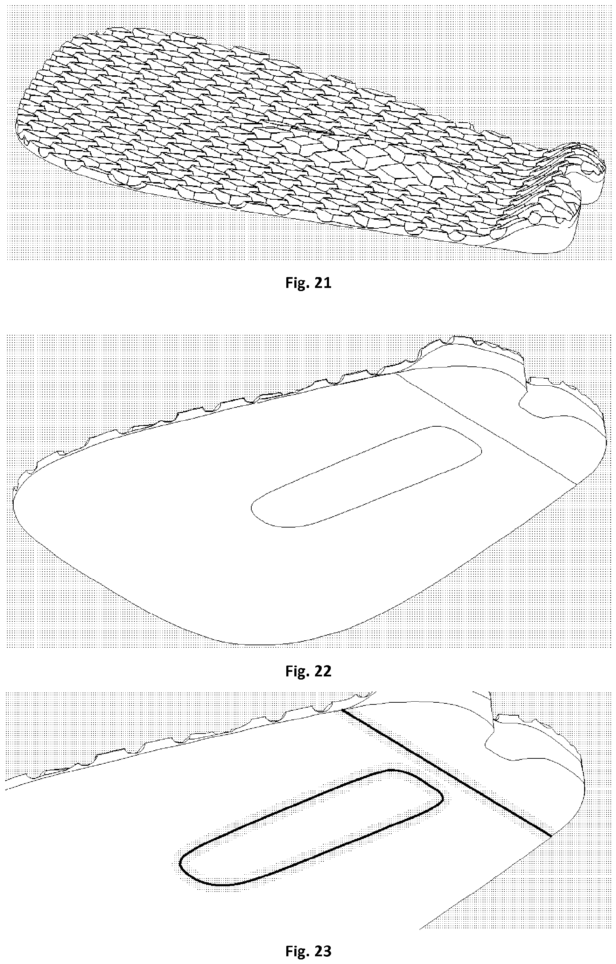

**Figure 22****:** Anti-slip pad known in the state of the art in ethylene vinyl acetate below perspective.
**Figure 23****:** Anti-slip pad known in the state of the art in ethylene vinyl acetate below perspective with unions' light blue lines.
**Figure 24****:** Fourier transform infra-red spectrum of a sample of the anti-slip pad known in the state of the art in alveolar synthetic material (foam) (a) versus reference spectrum of the substance (b): poli[(ethylene)-co-(vinyl acetate)] (EVA) copolymer.
**Figure 25****:** Microscopic visualization of the inclusions of cork material (suberous tissue) of a sample of the anti-slip pad known in the state of the art, in vestigial presence along the poli[(ethylene)-co-(vinyl acetate)] polymeric matrix. Observations made by digital microscopy, with a magnifying factor 50x.

### Detailed description

The present disclosure refers to an anti-slip pad for a sliding sports board, as for example water sports boards or snowboards.

In an embodiment, the anti-slip pad herein disclosed is a mono-block part that may be produced by a machining process or a moulding process.

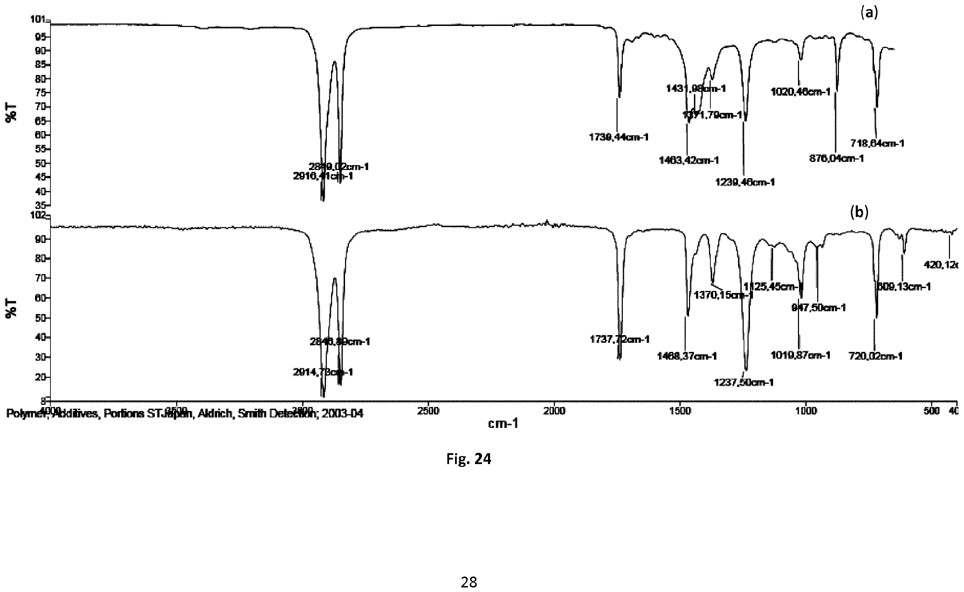

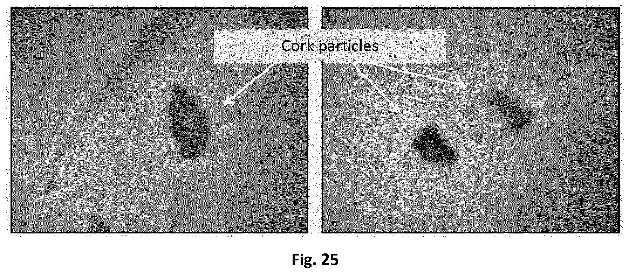

In order to compare the pad of the present disclosure with pads already existing in the market, a quantitative/compositional analysis was carried out resorting to digital microscopy techniques (Figure 25) and Fourier transform infra-red spectrum (Figure 24) of a state of the art copy, for example Ecocork traction pad. This state of the art copy is anti-slip pad in alveolar synthetic material (foam), aimed at assembly in surfboards.

With a view to characterizing the composition of said alveolar synthetic material, a qualitative analysis thereof was carried out resorting to techniques of infra-red spectroscopy with an attenuated total reflectance (ATR) accessory. To that end, an insulation of small fragments representative of the alveolar material under study was carried out obtained by micro-lamination of the state of the art pad, followed by apposition thereof on the crystal plate of the ATR accessory. After exposing the fragments to infra-red radiation, it was possible to obtain the characteristic absorption wavelengths inherent to the composition of the alveolar synthetic material in study, as well as, the absorption intensities thereof.

Based on the structural information from the qualitative interpretation of the main infra-red spectrum (Figure 24) of the state of the art pad, complemented by a research exercise on spectra library (ST Japan - Spectra Libraries), it is possible to conclude that the state of the art pad is in its almost entirely made of a poli[(ethylene)-co-(vinyl acetate)] (EVA) copolymer. With a markedly less expressive presence (vestigial) it was further possible to determine the dispersed occurrence of small cork fragments, over the powdery form and distributed randomly along the alveolar synthetic matrix (Figure 25).

Table 1 compares the percentages by weight of cork incorporated in the anti-slip pad herein disclosed with the state of the art pad. These values were determined after microscopic analysis of a known portion of the state of the art pad (test specimen) and subsequent (approximate) quantification of the volume of the cork particles included in that portion. Upon conversion into weight, after an approximate deduction of the characteristic density of each component (copolymer and cork) it is possible to estimate the percentage by weight incorporated in the state of the art pad.

| Pad herein disclosed | State of the art pad (estimate of the percentage by weight of cork incorporated in the pad) |
|---|---|
| 90 % - 97 % (w/w) of cork | 0.08 % (w/w) of cork |

The volume of the pad herein disclosed was 500 mm³; the total volume of cork particles included in the analysed portion of the test specimen was 1.07 mm³; the total weight of the analysed portion of the test specimen was 129 mg; the total weight of the cork particles included in the analysed portion of the test specimen was 12-13 mg. Therefore, the estimate of the percentage by weight of cork incorporated in the pad is 0.08 % (w/w) of cork.

The volume of the analysed portion of the test specimen was 500 mm³; the total volume of cork particles included in the analysed portion of the test specimen was 1.07 mm³; the total weight of the analysed portion of the test specimen was 129 mg; the total weight of the cork particles included in the analysed portion of the test specimen was 0.10 mg. Therefore, the estimate of the percentage by weight of cork incorporated in the pad is 0.08 % (w/w) of cork.

The present disclosure may be obtained by a moulding process comprising the following steps:
- defining by computer-aided design - computer-aided manufacturing CAD-CAM the mould of the part and elements in the constitution thereof from the fixed section, constituted by the clamping plate and cavity, and by the movable part, constituted by the male, wedges, extraction plates and stop plate;
- manufacturing the metallic mould and complementary components thereof, the mould being constituted by two half matrices, cavity and plug that together form in the inside thereof the part's geometry;
- assembling the fixed and movable section of all components constituting the mould;
- mixing the cork granules with the agglutinating agent with 90 % - 97 % (w/w) of cork, 3 % - 10 % (w/w) of an agglutinating agent and with a granulometry of 0.5 - 10 mm, preferably 0.5 - 2 mm, even more preferably 0.5 - 1 mm;
- injecting the mixture into the mould;
- extracting the moulded part.

In an embodiment, the CNC milling is the most used process for producing the mould, the turning and drilling are also much used processes for producing the components that are part of the mould.

In an embodiment, the anti-slip pad herein disclosed may be produced by machining, that is, resorting to a mechanical buffing process aiming at giving the intended shape to the anti-slip pad.

in an embodiment, the machining processes that may be used include sawing, levelling, turning, milling, among others.

The obtention method of the present disclosure according to the machining process comprises the following steps:
- designing the anti-slip pad in a computer-aided design - CAD software;
- based on the geometry built in the CAD, the computer-aided manufacturing - CAM system calculates the movements and trajectories of the tool for performing the manufacturing operation; preparing a cork agglomerate block with the correct dimensions for the machining thereof and with 90 % - 97 % (w/w) of cork, 3 % - 10 % (w/w) of an agglutinating agent and with a granulometry of 0.5 - 10 mm;
- preparing a cork agglomerate block with the correct dimensions for the machining thereof, preferably 94 % - 97 % (w/w) of cork, 3 % - 6 % (w/w) of an agglutinating agent and with a granulometry of 0.5 - 10 mm;
- cutting the block into subunits if necessary;
- glueing/uniting the subunits corresponding to the kicktail and the raised centre arch over the subunit corresponding to the pattern cross grid forming a single part or mono-block;
- fixing the block in the CNC milling machine;
- sending the code with the trajectories and movements of the operations calculated in the computer-aided manufacturing - CAM for the machine to start machining the block;
- initiating a general buffing;
- machining protuberances that may present various circular, triangular, square, pentagonal, hexagonal shapes or combinations thereof;
- machining the outer contour of the block;
- removing the part from the machine;
- applying the manual finishing.

With the present disclosure, glueing/union of one or more cork blocks may occur, however, how cork subunits are arranged so as to avoid fragility of the final product, is something different from the way ethylene vinyl acetate pads, already known in the state of the art, are produced.

In an embodiment, said subunits are glued resorting to suitable adhesive materials and with a viscosity varying between 4000-15000 mPa.s at 20 °C, preferably 9000-14000 mPa.s at 20 °C, even more preferably 10000 mPa.s at 20 °C.

In an embodiment, said subunits are glued resorting to suitable adhesive materials and with a density varying between 1.20-1.60 g/ml at 20 °C, preferably 1.47-1.59 g/ml at 20 °C.

In an embodiment, the adhesive materials may be polyurethane-based or a dispersion of polyvinyl alcohol, among others. In an embodiment, the adhesive materials may also be mono-component reactive glue, polyurethane-based or a dispersion of polyvinyl alcohol, of medium viscosity.

In an embodiment, the anti-slip pad may further be cut in two parts, three parts, four parts or five parts. This disclosure has the advantage of eliminating the fragility points and provides adhesion to the surface without any tension, because the surface to be glued is completely flat.

Although particular embodiments of the present disclosure have merely been represented and described herein, the subject matter expert will know how to introduce modifications and replace some technical features with equivalent ones, depending on the requisites of each situation, without leaving the scope of protection defined by the appended claims. The disclosed embodiments are combinable. The following claims set out particular embodiments of the disclosure.

## Claims

1. Sports board anti-slip pad comprising a plurality of protuberances for reducing user's slippage,
wherein the protuberances are circular, triangular, square, pentagonal, hexagonal or combinations thereof,
the sports board anti-slip pad being further **characterized in that** it comprises
90 % - 97 % (w/w) of cork with a granulometry of 0.5 - 10 mm and
3 % - 10 % (w/w) of an agglutinating agent, with a density at 20 °C varying between 150 - 460 kg/m3.

2. Anti-slip pad according to the previous claim comprising
94 % - 97 % (w/w) of cork with a granulometry of 0.5 - 10 mm and
3 % - 6 % (w/w) of an agglutinating agent.

3. Anti-slip pad according to any of the previous claims wherein the granulometry varies between 0.5 - 2 mm, preferably between 0.5 - 1 mm.

4. Anti-slip pad according to any of the previous claims wherein the agglutinating agent comprises 1 - 15% (w/w) of cork, preferably wherein the agglutinating agent comprises 2 - 10% (w/w) of cork, more preferably 2 - 5% (w/w).

5. Anti-slip pad according to any of the previous claims wherein the agglutinating agent is selected from the following list: polyurethane synthetic resin, phenolic synthetic resin, phenol formaldehyde resin, melamine resin, resin of plant origin, enzyme-based resin, urea formalin resin, thermoplastic resin, in particular polyvinyl chloride, aqueous-based polyurethane, or mixtures thereof.

6. Anti-slip pad according to the previous claim wherein the polyurethane synthetic resin is an aliphatic polyurethane resin comprising an acrylate copolymer.

7. Anti-slip pad according to any of the previous claims further comprising at least an additive selected from the following list: dyes, fragrances, emulsifiers, stabilizers, waterproofers, or combinations thereof.

8. Anti-slip pad according to any of the previous claims wherein the pad thickness varies between 1 - 10 mm, preferably 2 - 5 mm.

9. Anti-slip pad according to any of the previous claims, wherein the pad further comprises an adhesive layer able to adhere the anti-slip pad to the board surface.

10. Anti-slip pad according to any of the previous claims obtainable by moulding or obtainable by machining of 3 parts previously formed and glued to each other.

11. Anti-slip pad according to the previous claim wherein the 3 parts are a base part, an intermediate parallelepiped part and an end parallelepiped part, wherein the base part receives the intermediate parallelepiped part and the end parallelepiped part glued in "T" over the base part.

12. Anti-slip pad according to any of the previous claims wherein the pad is a traction pad.

13. Sports board comprising the anti-slip pad described in any of the previous claims.

14. Sports board according to the previous claim wherein the board is a surfboard, a paddleboard, a skimming board, a windsurf board, a kitesurf board, a wakeboard, a kneeboard, a wakesurf board, a wakeskate board, a snowboard, a skateboard comprising the anti-slip pad described in any of the claims 1-12.

15. Process for producing an anti-slip pad described in any of the claims 1 - 12 comprising the machining of said pad.

## Patentansprüche

1. Rutschfeste Auflage für Sportbretter, umfassend
eine Vielzahl von Ausstülpungen, um das Abrutschen des Benutzers zu verringern,
wobei die Ausstülpungen kreisförmig, dreieckig, quadratisch, fünfeckig, sechseckig oder Kombinationen davon sind,
wobei die rutschfeste Auflage für Sportbretter ferner **dadurch gekennzeichnet ist, dass** sie
90 % - 97 % (w/w) Kork mit einer Korngröße von 0,5 - 10 mm und
3 % - 10 % (w/w) eines Bindemittels mit einer Dichte,
die bei 20 °C zwischen 150 - 460 kg/m³ variiert, enthält.

2. Rutschfeste Auflage nach dem vorangehenden Anspruch, bestehend aus
94 % - 97 % (w/w) Kork mit einer Korngröße von 0,5 - 10 mm und
3 % - 6 % (w/w) eines Bindemittels.

3. Rutschfeste Auflage nach einem der vorangehenden Ansprüche, wobei die Korngröße zwischen 0,5 - 2 mm, bevorzugt zwischen 0,5 - 1 mm, variiert.

4. Rutschfeste Auflage nach einem der vorangehenden Ansprüche, wobei das Bindemittel 1 - 15 % (w/w) Kork umfasst, wobei das Bindemittel bevorzugt 2 - 10 % (w/w) Kork, besonders bevorzugt 2 - 5 % (w/w) umfasst.

5. Rutschfeste Auflage nach einem der vorangehenden Ansprüche, wobei das Bindemittel aus folgender Liste ausgewählt wird: Polyurethan-Kunstharz, Phenol-Kunstharz, Phenol-Formaldehyd-Harz, Melaminharz, Harz pflanzlichen Ursprungs, Harz auf Enzym-Basis, Harnstoff-Formaldehyd-Harz, thermoplastisches Harz, insbesondere Polyvinylchlorid, Polyurethan auf Wasserbasis oder Mischungen davon.

6. Rutschfeste Auflage nach dem vorangehenden Anspruch, wobei das Polyurethan-Kunstharz ein aliphatisches Polyurethanharz ist, umfassend ein Acrylat-Copolymer.

7. Rutschfeste Auflage nach einem der vorangehenden Ansprüche, die ferner mindestens einen Zusatzstoff enthält, der aus folgender Liste ausgewählt wird: Farbstoffe, Duftstoffe, Emulgatoren, Stabilisatoren, Imprägniermittel oder Kombinationen davon.

8. Rutschfeste Auflage nach einem der vorangehenden Ansprüche, wobei die Stärke der Auflage zwischen 1 - 10 mm, bevorzugt zwischen 2 - 5 mm, variiert.

9. Rutschfeste Auflage nach einem der vorangehenden Ansprüche, wobei die Auflage ferner eine Klebstoffschicht umfasst, um die rutschfeste Auflage auf der Oberfläche des Bretts aufzukleben.

10. Rutschfeste Auflage nach einem der vorangehenden Ansprüche, erzeugt durch Formen oder durch maschinelle Bearbeitung von 3 im Voraus geformten und miteinander verklebten Teilen.

11. Rutschfeste Auflage nach dem vorangehenden Anspruch, wobei die 3 Teile ein Unterteil, ein quaderförmiges Zwischenteil und ein quaderförmiges Abschlussteil sind, wobei das Unterteil das quaderförmige Zwischenteil aufnimmt und das quaderförmige Abschlussteil T-förmig auf das Unterteil aufgeklebt wird.

12. Rutschfeste Auflage nach einem der vorangehenden Ansprüche, wobei die Auflage ein Haftauflage ist.

13. Sportbrett, umfassend die in einem der vorangehenden Ansprüche beschriebene rutschfeste Auflage.

14. Sportbrett nach dem vorangehenden Anspruch, wobei das Brett ein Surfbrett, ein *Paddleboard,* ein *Skimboard,* ein Windsurfbrett, ein Kitesurfbrett, ein *Wakeboard,* ein *Kneeboard,* ein *Wakesurfboard,* ein *Wakeskateboard,* ein *Snowboard* oder ein *Skateboard* mit der in einem der Ansprüche 1-12 beschriebenen rutschfesten Auflage ist.

15. Verfahren zur Herstellung einer rutschfesten Auflage nach einem der Ansprüche 1 bis 12, umfassend die Bearbeitung der genannten Auflage.

## Revendications

1. Plateforme antidérapante de planche de sports comprenant
une pluralité de protubérances pour réduire le dérrapage de l'utilisateur,
dans laquelle les protubérances sont circulaires, triangulaires, carrées, pentagonales, héxagonales ou des combinaisons de ceux-ci,
la plateforme antidérapante de planche de sports étant également **caractérisée en ce qu'**elle comprend
90% - 97% (p/p) de liège avec une granulométrie de 0,5 -10 mm et
3% - 10% (p/p) d'un agent agglutinant,
avec une densité à 20°C variant entre 150 - 460 kg/m³.

2. Plateforme antidérapante selon la revendication précédente comprenant
94% - 97% (p/p) de liège avec une granulométrie de 0,5 -10 mm et
3% - 6% (p/p) d'un agent agglutinant.

3. Plateforme antidérapante selon l'une quelconque des revendications précédentes, dans laquelle la granulométrie varie entre 0,5 - 2 mm, de préférence entre 0,5 - 1 mm.

4. Plateforme antidérapante selon l'une quelconque des revendications précédentes, dans laquelle l'agent agglutinant comprend 1 - 15 % (p/p) de liège, de préférence dans laquelle l'agent agglutinant comprend 2 - 10% (p/p) de liège, plus préférablement 2 - 5% (p/p).

5. Plateforme antidérapante selon l'une quelconque des revendications précédentes, dans laquelle l'agent agglutinant est sélectionné à partir de la liste suivante : résine synthétique de polyuréthane, résine synthétique phénolique, résine phénol-formaldéhyde, résine de mélamine, résine d'origine végétale, résine à base d'enzymes, résine urée-formol, résine thermoplastique, en particulier chlorure de polyvinyle, polyuréthane de base aqueuse, ou des mélanges de ceux-ci.

6. Plateforme antidérapante selon la revendication précédente, dans laquelle la résine synthétique de polyuréthane est une résine de polyuréthane aliphatique comprenant un copolymère d'acrylate.

7. Plateforme antidérapante selon l'une quelconque des revendications précédentes comprenant également au moins un additif sélectionné à partir de la liste suivante : colorants, fragrances, émulsifiants, stabilisants, imperméabilisants, ou des combinaisons de ceux-ci.

8. Plateforme antidérapante selon l'une quelconque des revendications précédentes, dans laquelle l'épaisseur de la plateforme varie entre 1-10 mm, de préférence 2 - 5 mm.

9. Plateforme antidérapante selon l'une quelconque des revendications précédentes, dans laquelle la plateforme comprend également une couche adhésive capable d'adhérer la plateforme antidérapante à la surface de la planche.

10. Plateforme antidérapante selon l'une quelconque des revendications précédentes, pouvant être obtenue par moulage ou pouvant être obtenue par usinage de 3 pièces préalablement formées et collées les unes aux autres.

11. Plateforme antidérapante selon la revendication précédente, dans laquelle les 3 pièces sont une pièce de base, une pièce intermédiaire parallélépipède et une pièce d'extrémité parallélépipède, dans laquelle la pièce de base reçoit la pièce intermédiaire parallélépipède et la pièce d'extrémité parallélépipède collées en forme de « T » sur la pièce de base.

12. Plateforme antidérapante selon l'une quelconque des revendications précédentes, dans laquelle la plateforme est une plateforme de traction.

13. Planche de sports comprenant la plateforme antidérapante décrite dans l'une quelconque des revendications précédentes.

14. Planche de sports selon la revendication précédente dans laquelle la planche est une planche de surf, une planche de *paddleboard,* une planche de *skimboard,* une planche à voile, une planche de *kitesurf,* une planche de *wakeboard,* une planche de *kneeboard,* une planche de *wakesurf,* une planche de *wakeskate,* une planche de *snowboard,* un *skateboard* comprenant la plateforme antidérapante décrite dans l'une quelconque des revendications 1-12.

15. Procédé pour produire une plateforme antidérapante décrite dans l'une quelconque des revendications 1-12 comprenant l'usinage de ladite plateforme.
